# EUROPEAN PATENT APPLICATION

(11) **EP 4 614 380 A1**
(43) Date of publication of application: **10.09.2025**
(21) Application number: 25161688.4
(22) Date of filing: 04.03.2025
(51) Int. Cl.: G06F 30/10, G06F 111/02

(54) **CHARACTERIZATION OF OBJECT ATTRIBUTES FOR COMPONENT PART REQUIREMENTS**

(30) Priority: 04.03.2024 US 202418594840
(71) Applicant: RTX Corporation, Farmington, CT 06032 (US)
(72) Inventor: ROGERS, Daniel, Farmington, 06032 (US); DOLL, Stephen, Farmington, 06032 (US); SHERWOOD, Jacob, Farmington, 06032 (US); OGHABIR, Solomon, Farmington, 06032 (US); GWARA, Michael, Farmington, 06032 (US); ALBINO, Hermitt Vega, Farmington, 06032 (US); DeGRAY, Jeffrey, Farmington, 06032 (US); SALZILLO Jr., Richard, Farmington, 06032 (US); HOELDERLIN, Laura, Farmington, 06032 (US); ANDERSON, Kristopher, Farmington, 06032 (US)
(74) Representative: Dehns

(57) **Abstract**

A computer implemented method of communicating information within a model of a component (42) in a computer-aided design (CAD) system (20) to a second system (64), the method includes accessing a CAD model (36) of the component (42) with a processor based device (22) of a CAD system (20), the component (42) includes a plurality of features (44A-C), assigning one or more object attributes (48) in a first format to one or more features (44A-C) of the CAD model (36), and mapping the assigned object attributes (48) to at least one characteristic based on a predefined schema (32) to generate information that is usable by a downstream system (40) in a second format that differs from the first format.

## Description

### TECHNICAL FIELD

The present disclosure relates generally to a computer-aided design (CAD) system, and more particularly to describing component and feature information in a CAD environment.

### BACKGROUND

Computer-aided design (CAD) systems are utilized to define part and feature requirements in a three-dimensional model. The model of a part geometry can be annotated to include additional information and requirements relating to each feature of a part. Product and manufacturing information (PMI) along with other CAD objects can be utilized to capture additional information relating to the part and feature geometry. Such information may include material, geometric, inspection and manufacturing information that is utilized throughout various stages of manufacturing, validation and assembly of any part or component. Characteristics of each feature of a part may be applied to the PMI to track requirements in a digital thread. However, parts may include thousands of unique parameters that correspond with multiple features. The massive quantity of applicable information may prevent the usable application to the CAD model impractical for application to each feature. The practical limits of attaching additional information to portions of a CAD model can prevent the full potential of CAD systems from being fully realized.

### SUMMARY

A computer implemented method of communicating information within a model of a component in a computer-aided design (CAD) system to a second system, the method, according to an exemplary embodiment of this disclosure, among other possible things includes accessing a CAD model of the component with a processor based device of a CAD system, the component includes a plurality of features, assigning one or more object attributes in a first format to one or more features of the CAD model, and mapping the assigned object attributes to at least one characteristic based on a predefined schema to generate information that is usable by a downstream system in a second format that differs from the first format.

In a further embodiment of the foregoing, the computer implemented method further includes generating a bill of characteristics for the component with the generated information that is usable by the downstream system.

In a further embodiment of any of the foregoing, the computer implemented method further includes automatically populating the object attributes using an automated utility of the CAD system.

In a further embodiment of any of the foregoing, the computer implemented method further includes manually populating the object attributes using input features of the CAD system.

In a further embodiment of any of the foregoing computer implemented methods, the plurality of features includes a group of similar features and the automated utility populates each of the group of similar features.

In a further embodiment of any of the foregoing, the computer implemented method further includes a processor based characterization system that performs the mapping of the assigned object attributes to generate information that is usable by the downstream system.

In a further embodiment of any of the foregoing computer implemented methods, the predefined scheme is part of the characterization system.

In a further embodiment of any of the foregoing computer implemented methods, the predefined scheme is a separate data file that is usable by the characterization system.

In a further embodiment of any of the foregoing computer implemented methods, the information useable by the downstream system is utilized for at least one of validation, testing or manufacturing.

In a further embodiment of any of the foregoing computer implemented methods, at least some of the object attributes corresponds to a geometric parameter or group of geometric parameters for each of the plurality of features within the predefined scheme.

In a further embodiment of any of the foregoing computer implemented methods, at least some of the object attributes correspond to a predefined feature inspection criteria of the predefined scheme or a predefined feature testing criteria of the predefined scheme.

In a further embodiment of any of the foregoing, the computer implemented method further includes generating a unique product and manufacturing identifier (PMI) for each set of features and assigning the object attributes to the PMI.

A computer-aided design (CAD) system for augmenting information for a three-dimensional model, according to another exemplary embodiment of this disclosure, among other possible things includes a processor and a memory that is in communication with the processor. The memory contains instructions that are executed by the processor to access a CAD model of the component with a processor based device of a CAD system. The component includes a plurality of features. One or more object attributes are assigned in a first format to one or more features of the CAD model, and the assigned object attributes are mapped to at least one characteristic based on a predefined schema to generate information that is usable by a downstream system in a second format that differs from the first format.

In a further embodiment of the foregoing CAD system, the memory contains instructions that are executed by the processor to generate a bill of characteristics for the component with the generated information usable by the downstream system.

In a further embodiment of any of the foregoing CAD systems, the memory contains instructions that are executed by the processor to automatically populate the object attributes using an automated utility of the CAD system.

In a further embodiment of any of the foregoing CAD systems, the memory contains instructions that are executed by the processor to automatically populate object attributes for each of a group of similar features.

In a further embodiment of any of the foregoing, the CAD system further includes a processor based characterization system that performs the mapping of the assigned object attributes to generate information that is usable by the downstream system.

In a further embodiment of any of the foregoing CAD systems, the predefined scheme is part of the characterization system.

In a further embodiment of any of the foregoing CAD systems, the predefined scheme is a separate data file that is usable by the characterization system.

In a further embodiment of any of the foregoing CAD systems, the memory contains instructions for generating a unique product and manufacturing identifier (PMI) for each set of features and assigning the object attributes to a corresponding one of the generated PMI.

A method of characterizing object attributes to define feature level requirements, the method, according to another exemplary embodiment of this disclosure, among other possible things includes generating an attribute schema that defines a plurality of attributes and a corresponding plurality of feature level requirements, generating a unique product and manufacturing information (PMI) identification number for each of a plurality of features of a component model that is accessed in a computer-aided design (CAD) system, assigning object attributes to the PMI for each of the plurality of features, and characterizing each of the assigned object attributes to at least one feature level requirement based on the generated attribute schema to generate information that is usable by a system independent of the CAD system.

In a further embodiment of the foregoing, the method of characterizing object attributes further includes generating a bill of characteristics for the component from the information generated.

Although the different examples have the specific components shown in the illustrations, embodiments of this invention are not limited to those particular combinations. It is possible to use some of the components or features from one of the examples in combination with features or components from another one of the examples.

These and other features disclosed herein can be best understood from the following specification and drawings, the following of which is a brief description.

### BRIEF DESCRIPTION OF THE DRAWINGS

Figure 1 is a schematic view of a computer system embodiment.
Figure 2 is a schematic view of an example component model with a plurality of features.
Figure 3 is an example table of object attributes for a feature of an example component.
Figure 4 is an example table of object attributes and characterized values for features of the example component.
Figure 5 is a table illustrating a dependency checks and actions that may be applied to the characteristics according to one example embodiment.
Figure 6 is a bill of characteristics according to an example disclosed embodiment.
Figure 7 is a flow diagram illustrating example steps for characterizing attributes to generate feature level requirements.

### DETAILED DESCRIPTION

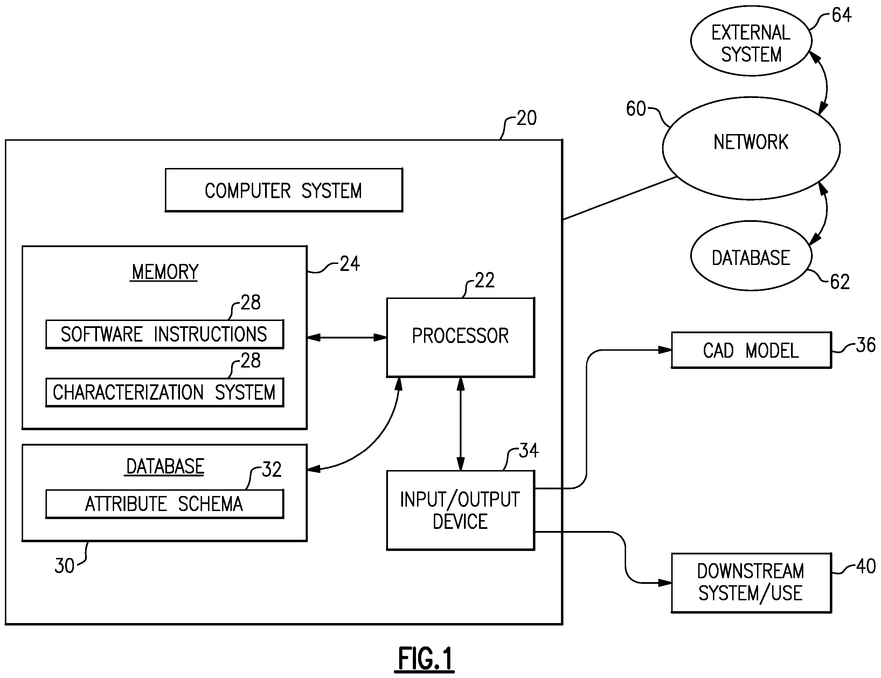

Figure 1 illustrates a computer system 20 for creating and implementing an attribute schema that provides for characterization of object attributes to define requirements corresponding to features of a component. The object attributes are characterized with an attribute schema to generate a listing of feature level requirements. Characterizing the object attributes provides for digital consumption of requirements for each feature by manufacturing, inspection, maintenance, and other downstream systems.

The system 20 includes one or more of a processor 22, memory 24, and input and/or output devices and/or interface 34. The processor 22 is configured to execute one or more software programs 26. The memory 24 may further include a characterization system 28 utilized to map object attributes to requirements for use by downstream systems.

The example memory 24, for example, include UVPROM, EEPROM, FLASH, RAM, ROM, DVD, CD, a hard drive, or other computer readable medium which may store data and/or the CAD software of this description. The system 20 may be a desktop computer, laptop computer, smart phone, tablet, or any other computer device. In some embodiments, one or more of the system 20 includes an input device, such as a keyboard and mouse, and one or more output devices such as a monitor, speakers, printers, etc. The interface facilitates communication with the other systems and/or components of a network 60. The network 60 may be a private local area network (LAN), a private wide area network (WAN), the Internet, a mesh network, or any other network as is known in the art.

The computer system 20 may be configured to implement one or more aspects of the present disclosure, however, the present disclosure is not limited to this particular computer system embodiment. The computer system 20 includes a processor 22 in signal communication with the memory 24. The processor 22 may be any type of computing device, computational circuit, or processing circuit capable of executing a series of instructions that are stored in memory 24. The processor 22 may include multiple processors and/or multicore CPUs and may include any type of processor, such as a microprocessor, digital signal processor, co-processors, a micro-controller, a microcomputer, a central processing unit, a field programmable gate array, a programmable logic device, a state machine, logic circuitry, analog circuitry, digital circuitry, and other known computing devices.

The software instructions 26 stored in memory 24 may represent one or more algorithms for controlling the aspects of the computer system 20, and the stored instructions are not limited to any particular form provided they can be executed by the processor 22. The memory 24 may be a non-transitory computer readable storage medium configured to store instructions that when executed by the processor 22, cause the processor 22 to perform or cause the performance of certain functions. The memory 24 may be a single memory device or a plurality of memory devices. A memory device may include a storage area network, network attached storage, as well as a disk drive, a read-only memory, random access memory, volatile memory, non-volatile memory, static memory, dynamic memory, flash memory, cache memory, and/or any device that stores digital information.

In various embodiments, the computer system 20 may include a database 30 in communication with the processor 22. In various embodiments, a database 62 may be located external to the computer system 20 and in signal communication with the computer system 20 via any wired or wireless protocol. In various other embodiments, the database 30 may be integral to the computer system 20. For example, the database 30 may be integrated with the memory 24.

The example network 60 may include any suitable electronic communication network or combination of electronic communication networks including, but not limited to, wired and/or wireless local area networks, internet-based networks, cloud-based storage, and communication networks, and the like. The network 60 may allow remote electronic communications between the computer system 20 and one or more external systems 64 and databases 62. The external systems 64 may computer-aided manufacturing (CAM) computers, manufacturing equipment, inspection equipment and systems utilized in testing a validation operations.

The example computer system 20 is operable for the generation of three-dimensional model of a component part. Accordingly, the example system provides for the generation and manipulation of a component model in a computer-aided design (CAD) environment. The system 20 includes instructions for operating the CAD system as required and known for the creation and manipulation of information associated with a component model.

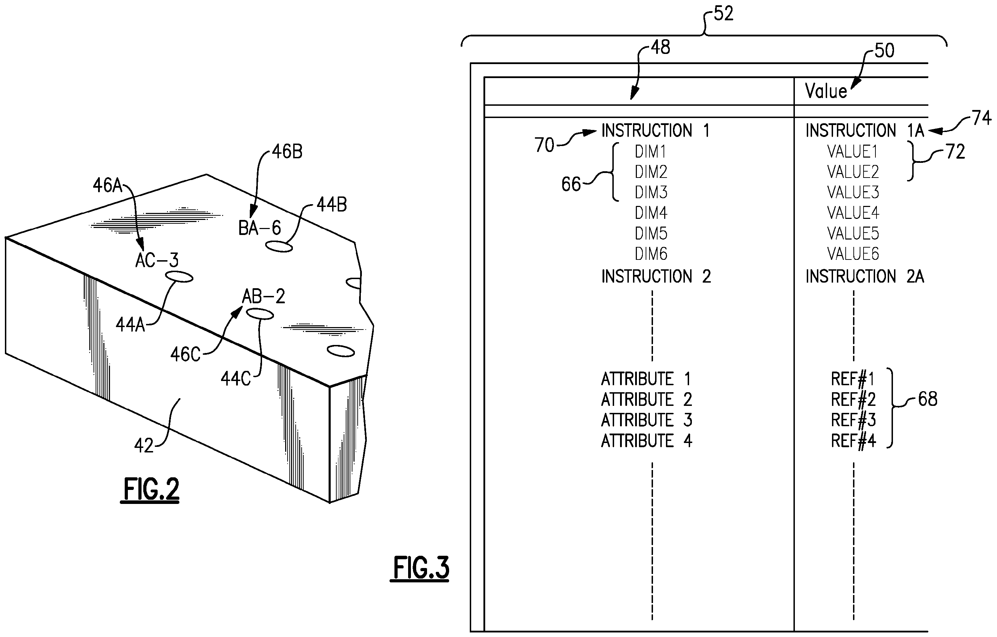

Referring to Figure 2, with continued reference to Figure 1, an example component 3D model of a component 42 is schematically shown and includes a plurality of features 44A-C. In one disclosed example, the features 44A-C are holes within the component part 42. It should be appreciated that although holes 44A-C are disclosed by way of example, any feature of a component may be utilized and defined within the scope and contemplation of this disclosure.

Each of the features 44A-C are defined by geometric tolerances that are utilized to fabricate the component 42. Moreover, each feature includes non-geometric requirements that are to be fulfilled to create an acceptable component. The example CAD system provides for the inclusion of such additional information that is utilized in downstream systems and process by linking information to each feature. In CAD systems, product, and manufacturing information (PMI) can be utilized to define requirements of features of a 3D model.

It should be appreciated that other features of a CAD system may enable linking of information to features and elements of the 3D model. For example, attributes may be applied directly onto faces, surfaces, views, bodies, and/or any other feature of the 3D model. Accordingly, although PMI is disclosed and described by way of example, object attributes may be applied to any element of the 3D model and remain within the scope and contemplation of this disclosure.

In some components, the number of features may number in the thousands and therefore including information for consumption by downstream systems becomes impractical. Accordingly, a system and method of this disclosure provides for the creation of an attribute schema that enables characterization of attributes for each feature. The PMI, or other CAD model feature, may be populated with object attributes corresponding to each feature 44A-C of the component. Object attributes may include material, criticality augmentation, manufacturing instructions and inspection criteria. The object attributes are used by the characterization system 28 along with the attribute schema 32 to generate feature level requirements. The feature level requirements are then utilized by downstream systems 40 (Figure 1).

Referring to Figure 3 with continued reference to Figures 1 and 2, in one example embodiment, features 44A-C of the component 42 are assigned a unique PMI identifier 46A-C. The PMI identifiers 46A-C may be a number, letter, or some combination of that provides for tracking of attributes for each of the features. In one disclosed example, the PMI identifiers 46A-C are letters and numbers that correspond to one of a plurality of holes within the component 42.

In one example embodiment of the disclosed method, the PMI for each of the features 44A-C are populated with corresponding object attributes. In one disclosed example, a listing of object attributes 48 is shown for hole feature BA-6. Each object attribute is an identification of a parameter of the hole feature BA-6. In the disclosed example, the object attributes can include features such as hole dimensions indicated at 66. Other object attributes may include instructions as indicated at 70.

For each of the object attributes 48 a value may be applied as indicated at 50. The value may be dimensions as indicated at 72 that apply to the dimensions indicated at 66. The values 50 may further include instructions as indicated at 74. In one disclosed example, the instruction indicated at 74 is to coat the feature before some other action.

The values 50 may also include reference numbers as indicated at 68 that are correspond to features defined in the attribute schema 32 (Figure 1).

The object attributes 48 and values 50 may be populated manually for each PMI. Alternatively, the object attributes 48 and values for each feature may automatically be populated for each corresponding PMI. Moreover, for similar features, such as the example holes 44A-C, many object attributes and values maybe populated as a group.

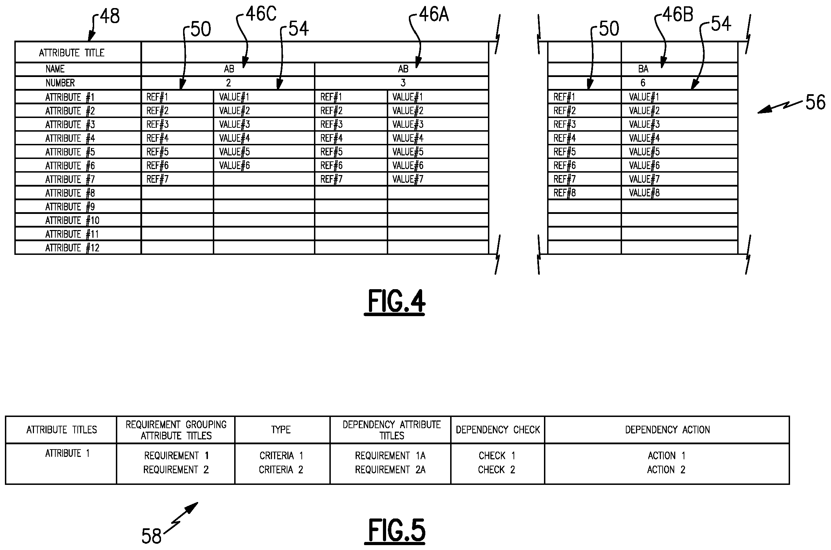

Referring to Figure 4 with continued reference to Figures 2 and 3, an example table 56 is shown that includes an example listing of attributes 48 for several example component features 46A-C. It should be appreciated, that the example table 56 is only a small sampling of component attributes that would be included with any component model.

The example table 56 shows only a few example features for the component along with the listed attributes 48 and values 54. The values 54 are taken from the PMI listing 52 for each of the component features 46A-C. As noted previously, the values 54 may include an actual dimension, value, or the reference number 68 (Figure 3). The values 54 may further include definitions that correspond with the reference number 68. A characterization reference number 50 is also provided with respect to some of the values. The reference number 50 corresponds with the actual values, information and/or instructions that correspond with the attribute schema 32. Accordingly, the table 56 is an example of how the feature requirements are provides after characterization by the characterization system 28. Each of the reference numerals 68 are shown along with the corresponding definition 54 that would be ascertained during characterization.

Referring to Figure 5 with continued reference to Figures 2, 3 and 4, an example dependency check listing is schematically indicated at 58. The dependency check listing 58 includes additional information with regard to each of the object attributes 48 for each of the features. The specific information that is defined as corresponding to each object attribute can be varied and tailored to application specific requirements and needs. In this disclosed example, the dependency check listing 58 provides information relating to actions taken with regard to testing and altering specific attribute content of the component 42.

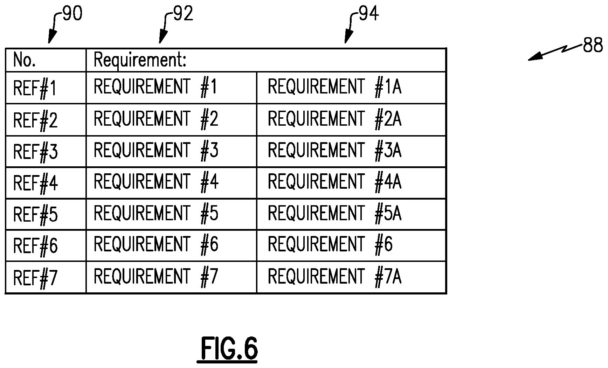

Referring to Figure 6 a bill of characteristics 88 is shown and include a listing of characterization reference numbers 90 and the corresponding requirement 92. The bill of characteristics 88 provides for mapping the characterization reference numbers 90 to the requirements 92 that provides information and requirements for the product and specific feature. An additional column indicated at 94 provides further information, instructions and/or values that correspond to each characterization reference number 90. As shown in the illustrated examples, the values may include process information, dimension, and tolerance information as well as additional description and references that are usable by downstream production, inspection, and maintenance systems.

The example reference numbers 90 are shown with an example format. Other combinations of numbers and letters could be used and are within the contemplation and scope of this disclosure. For example, rather than the number shown by way of example, an alphanumeric identifier or other number or combination of symbols could be utilized. The bill of characteristics 88 is a listing that illustrates how the attribute schema 32 may be used to impart significant information for each part and model feature.

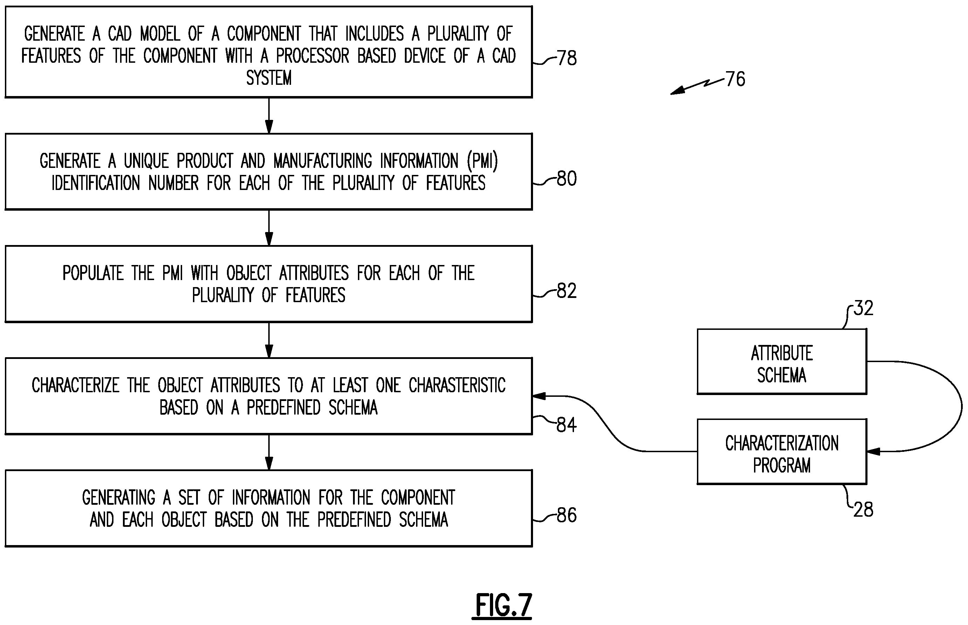

Referring to Figure 7 with continued reference to the foregoing figures, an example operational embodiment of the example method is shown schematically and indicated at 76. The example method begins with the generation of a CAD model 36 that includes a plurality of features of the component 42 with the example system 20 as indicated at 78. The CAD model 36 may be provided by another system 20 and remain within the contemplation and scope of this disclosure.

The CAD model 36 define features that are assigned a unique PMI identifier as indicated at 80. The PMI provides for the association of information to a specific feature of the component. In one example, the features are holes, however any feature or group of features may be utilized and assigned a PMI identifier. Moreover, although PMI is referenced by way of example, other CAD model features may be utilized to identify and generate feature level requirements.

The PMI identifier for each feature is then populated with corresponding object attributes as is indicated at 82. Object attributes may be populated automatically through the use of an automated utility that is part of the system 20. Alternatively, object attributes may be populated manually. The population of object attributes may be performed at the creation of the design geometry or in the product definition stage. Moreover, population of object attributes may be performed at other stages of the design process as needed to include information desired for downstream processes, systems and uses.

Upon completion of the model and population of the object attributes for each feature PMI, the model is saved and may be provided for downstream consumption. The example model will include information utilized to determine feature level requirements that may be extracted with the characterization system 28. Extraction of the feature level requirements can be accomplished at any time after the model is complete and the object attributes for each of the features is populated and saved.

Once a need for feature level requirements arises, the characterization system 28 can be utilized with the predefined attribute schema 32 to understand the applied attributes as indicated at 84. The attribute schema 32 may be a separate file or database accessed by the characterization system 28. The attribute schema 32 may also be hardcoded as part of the characterization system 28. The characterization system 28 maps the object attributes saved as part of the PMI to the corresponding requirement set out in the attribute schema 32. In one disclosed example, the reference values 68 saved as an object attribute are mapped to specific feature level requirements by the characterization system 28 based on the attribute schema 32.

In the disclosed example, the characterization system 28 provides the generation of a set of information for the component based on the attribute schema 32 as indicated at 86. As appreciated, any information pertaining to feature level requirements can be saved as PMI of the model. Accordingly, extraction of the particular type of information from the PMI could be tailored to the downstream system needs. For example, inspection requirements may be extracted and utilized to generate inspection and validation requirements. Similarly, information utilized for testing may be generated in suitable formats for testing for the specific component.

Accordingly, the example disclosed system and method provides for the inclusion of and extraction of many feature level requirement within a CAD model.

Although an example embodiment has been disclosed, a worker of ordinary skill in this art would recognize that certain modifications would come within the scope of this disclosure. For that reason, the following claims should be studied to determine the scope and content of this disclosure.

## Claims

1. A computer implemented method of communicating information within a model of a component (42) in a computer-aided design (CAD) system (20) to a second system (64), the method comprising:
accessing a CAD model (36) of the component (42) with a processor based device (22) of a CAD system (20), the component (42) including a plurality of features (44A-C);
assigning one or more object attributes (48) in a first format to one or more features (44A-C) of the CAD model (36); and
mapping the assigned object attributes (48) to at least one characteristic based on a predefined schema (32) to generate information usable by a downstream system (40) in a second format that differs from the first format.

2. The computer implemented method as recited in claim 1, further comprising generating a bill of characteristics (88) for the component (42) with the generated information usable by the downstream system (40).

3. The computer implemented method as recited in claim 1 or 2, further comprising automatically populating the object attributes (48) using an automated utility of the CAD system (20).

4. The computer implemented method as recited in claim 3, wherein the plurality of features (44A-C) comprises a group of similar features (44A-C) and the automated utility populates each of the group of similar features (44A-C).

5. The computer implemented method as recited in claim 1 or 2, further comprising manually populating the object attributes (48) using input features (46A-C) of the CAD system (20).

6. The computer implemented method as recited in any preceding claim, further comprising a processor based characterization system (28) that performs the mapping of the assigned object attributes (48) to generate information usable by the downstream system (40).

7. The computer implemented method as recited in claim 6, wherein the predefined schema (32) is part of the characterization system (28).

8. The computer implemented method as recited in claim 6 or 7, wherein the predefined schema (32) is a separate data file usable by the characterization system (28).

9. The computer implemented method as recited in any of claims 6 to 8, wherein the information useable by the downstream system (40) is utilized for at least one of validation, testing or manufacturing.

10. The computer implemented method as recited in any preceding claim, wherein at least some of the object attributes (48) corresponds to a geometric parameter or group of geometric parameters for each of the plurality of features (44A-C) within the predefined schema (32).

11. The computer implemented method as recited in any preceding claim, wherein at least some of the object attributes (48) correspond to a predefined feature inspection criteria of the predefined scheme or a predefined feature testing criteria of the predefined scheme.

12. The computer implemented method as recited in any preceding claim, further comprising generating a unique product and manufacturing identifier (PMI) (46A-C) for each set of features (44A-C) and assigning the object attributes (48) to the PMI (46A-C).

13. A computer-aided design (CAD) system (20) for augmenting information for a three-dimensional model comprising:
a processor (22);
a memory (24) in communication with the processor (22), the memory (24) containing instructions executed by the processor (22) to cause the system (20) to carry out the computer implemented method of any preceding claim.

14. A method of characterizing object attributes (48) to define feature level requirements (92), the method comprising:
generating an attribute schema (32) that defines a plurality of attributes (48) and a corresponding plurality of feature level requirements (92);
generating a unique product and manufacturing information (PMI) identification number (46A-C) for each of a plurality of features (44A-C) of a component model (36) accessed in a computer-aided design (CAD) system (20);
assigning object attributes (48) to the PMI (46A-C) for each of the plurality of features (44A-C); and
characterizing each of the assigned object attributes (48) to at least one feature level requirement (92) based on the generated attribute schema (32) to generate information usable by a system (64) independent of the CAD system (20).

15. The method of characterizing object attributes (48) as recited in claim 14, further comprising generating a bill of characteristics (88) for the component (42) from the information generated.
